# EUROPÄISCHE PATENTSCHRIFT

(11) **EP 4 118 732 B1**
(45) Veröffentlichungstag und Bekanntmachung des Hinweises auf die Patenterteilung: **21.10.2026**
(21) Anmeldenummer: 21725394.7
(22) Anmeldetag: 22.04.2021
(51) Int. Cl.: H02K 1/20, H02K 5/20, H02K 9/19

(54) **ELEKTRISCHE MASCHINE MIT KÜHLKANAL ZWISCHEN GEHÄUSE UND STATOR**
ELECTRIC MACHINE WITH COOLING CHANNEL BETWEEN A HOUSING AND A STATOR
MACHINE ÉLECTRIQUE AVEC CANAL DE REFROIDISSEMENT ENTRE BOÎTIER ET STATOR

(30) Priorität: 30.04.2020 DE 102020205499
(43) Veröffentlichungstag der Anmeldung: 18.01.2023
(73) Patentinhaber: Siemens Mobility GmbH, 80997 München (DE)
(72) Erfinder: KÖRNER, Olaf, 90469 Nürnberg (DE); OUDE KOTTE, Freerk Jacobus, 90547 Stein (DE)
(74) Vertreter: Siemens Patent Attorneys
(86) Internationale Anmeldenummer: PCT/EP2021/060487
(87) Internationale Veröffentlichungsnummer: WO 2021/219475

(56) Entgegenhaltungen:
- DE-A1- 1 488 657
- DE-A1- 102015 016 584
- DE-A1- 102016 000 819
- DE-A1- 102016 000 985
- DE-A1- 102016 203 945
- DE-A1- 102017 010 383
- DE-A1- 102017 112 835

## Beschreibung

Die Erfindung bezieht sich auf elektrische Maschinen, die mit Kühlkanälen zum Führen von Kühlmittel ausgestattet sind. Die Kühlkanäle ermöglichen es, die elektrische Maschine, insbesondere deren Stator, während des Betriebs zu kühlen.

Die Offenlegungsschrift DE 10 2017 010 383 A1 offenbart ein Statorelement eines Rotationsmotors, welches vorzugsweise aus einem Blechpaket gebildet ist, welches wiederum aus mehreren, aneinandergereihten Blechschnitten zusammengefügt ist. Dabei sind in den jeweiligen Blechschnitten entsprechende formidentische und deckungsgleich positionierte Aussparungen vorgesehen, die beispielsweise durch Stanzen der Blechschnitte ausgebildet werden. Beim Zusammenfügen der Blechschnitte zum Blechpaket werden die Blechschnitte derart hintereinander ausgerichtet, dass diese nach dem Zusammenbau des Statorelements beziehungsweise dessen Blechpakets wenigstens einen Kühlkanal ausbilden. Der einzelne Blechschnitt ist zumindest im Randbereich der jeweiligen Aussparung mittels eines Dichtungsmittels beschichtet, welches als eine nichtmetallische Beschichtung ausgebildet ist, beispielsweise als eine Polymerbeschichtung, die eine hohe Hitzebeständigkeit bei gleichzeitiger hoher mechanischer Stabilität besitzt. Das Dichtungsmittel dient zur Abdichtung gegen Kühlmittel, um eine Korrosion der Blechschnitte im Blechpaket zu verhindern.

Die Offenlegungsschrift DE 10 2016 000 985 A1 zeigt einen Stator einer elektrischen Maschine, der ein Blechpaket und ein Gehäuse umfasst. Das Blechpaket weist eine Mehrzahl von Einzelblechen auf, die in axialer Richtung des Stators nebeneinander angeordnet sind. Jedes der Einzelbleche weist zumindest eine rechteckförmige Vertiefung auf, so dass sich durch die Anordnung der Einzelbleche zueinander an einer Außenseite des Stators beziehungsweise des Blechpakets ein Kanal zum Führen eines Kühlmediums ergibt, der geradlinig von einer Stirnfläche des Stators zu einer dieser axial gegenüberliegenden Stirnfläche des Stators verläuft. Der Stator kann mehr als einen Kanal aufweisen, welche in Umfangsrichtung des Stators in vorbestimmten Abständen zueinander angeordnet sind und sich parallel zueinander erstrecken. Zusätzlich ist an der Außenseite des Blechpakets eine metallische Beschichtung durch Galvanisieren des Blechpakets aufgebracht, welche die Mantelfläche des Stators ausbildet. Durch die Beschichtung kann verhindert werden, dass das beim Kühlen des Stators in dem Kanal geförderte Kühlmedium zwischen die Einzelbleche eindringt und durchsickert.

Die Offenlegungsschrift DE 10 2015 016 584 A1 betrifft einen Stator für eine elektrische Maschine, mit einem Blechpaket, welches eine Mehrzahl von Einzelblechen umfasst, welche in axialer Richtung des Stators aneinander angeordnet sind. Das Blechpaket weist eine metallische Beschichtung auf, welche eine geschlossene Mantelfläche des Blechpakets bildet. Jedes der Einzelbleche weist eine Vertiefung auf, wobei die Einzelbleche derart angeordnet werden, dass durch die Vertiefungen an einer Außenseite des Blechpakets ein Kanal zum Führen eines Kühlmediums ausgebildet wird. Die Beschichtung wird durch Kaltgasspritzen oder alternativ durch Galvanisieren oder elektrophoretische Abscheidung aufgebracht. Das Beschichten ersetzt das Paketieren der Einzelbleche.

Die Offenlegungsschrift DE 10 2016 000 819 A1 offenbart einen Statorträger für eine elektrische Maschine, insbesondere eines Kraftwagens, mit einer Mehrzahl von von einem Kühlmedium zum Kühlen des Statorträgers durchströmbaren Kühlkanälen. Die Kühlkanäle sind dabei teilweise durch ein Trägerelement und teilweise durch eine mittels eines generativen Herstellungsverfahrens auf das Trägerelement aufgebrachten Schicht begrenzt. Die Schicht ist mittels Kaltgasspritzens auf das Träger aufgebracht.

Die Offenlegungsschrift DE 10 2016 203 945 A1 zeigt eine Statoreinrichtung für eine elektrische Maschine und ein Verfahren zu deren Herstellung. Die Statoreinrichtung der elektrischen Maschine besteht aus einem Blechpaket, wobei auf Zähnen Statorwicklungen untergebracht werden können. Außerdem ist ein Mantelbauteil vorgesehen, welches beispielsweise einen Teil des Gehäuses der elektrischen Maschine darstellen kann. Auf einer Mantelfläche des Blechpakets ist eine Schicht aufgebracht, welche unter anderem Kühlkanäle ausbilden kann. Außerdem stellt die Oberfläche eine leicht zu bearbeitende Fügefläche zur Verfügung, damit das beschichtete Blechpaket in das Mantelbauteil eingesetzt werden kann. Die Schicht kann vorzugsweise durch Kaltgasspritzen hergestellt werden.

Der Erfindung liegt die Aufgabe zugrunde, eine elektrische Maschine anzugeben, die hinsichtlich der Ausgestaltung der Kühlkanäle einfacher und kostengünstiger zu fertigen ist als herkömmliche Maschinen.

Diese Aufgabe wird erfindungsgemäß durch eine Maschine mit den Merkmalen gemäß Patentanspruch 1 gelöst. Vorteilhafte Ausgestaltungen der erfindungsgemäßen Maschine sind in Unteransprüchen angegeben.

Danach ist erfindungsgemäß vorgesehen, dass der Kühlkanal durch einen Innenwandabschnitt der Innenwand des Gehäuses und einen gegenüberliegenden Außenwandabschnitt einer Außenwand des Stators gebildet und begrenzt ist.

Ein wesentlicher Vorteil der erfindungsgemäßen Maschine besteht darin, dass der oder die Kühlkanäle unmittelbar an den Stator der Maschine angrenzen, sodass der Stator besonders effektiv gekühlt wird.

Ein weiterer wesentlicher Vorteil der erfindungsgemäßen Maschine besteht darin, dass aufgrund der Begrenzung des oder der Kühlkanäle durch den Stator ein zweischaliger Gehäuseaufbau zur Bildung von Kühlkanälen innerhalb des Gehäuses vermieden werden kann.

Der Stator weist eine Vielzahl an aufeinandergepressten Statorblechen auf.

Außenliegende Stirnflächen bzw. außenliegende Kanten der Statorbleche sind mit einer äußeren Beschichtung versehen, die eine äußere Mantelfläche des Blechpakets und damit des Stators bildet.

Die äußere Beschichtung bildet den Außenwandabschnitt der Außenwand des Stators, die den zumindest einen Kühlkanal statorseitig begrenzt.

Im Bereich der äußeren Beschichtung ist das Blechpaket bzw. der Stator im Querschnitt vorzugsweise kreisrund.

Die äußere Beschichtung des Stators ist erfindungsgemäß eine Kaltgasspritzschicht ("Cold-Spray"-Schicht), eine Flammspritzschicht, eine mit einem thermischen Spritzverfahren für metallische Werkstoffe hergestellte Schicht oder eine Schicht, die durch Auftragsschweißen hergestellt worden ist.

Bezüglich möglicher Ausgestaltungen des Kaltgasspritzens bzw. Herstellens von Kaltgasspritzschichten sei auf die Literatur verwiesen, beispielsweise auf "Review on Cold Spray Process and Technology Part I - Intellectual Property" (Irissou et al., Journal of Thermal Spray Technology, 17, 4, pp. 495-516, 2008) .

Die äußere Beschichtung des Stators ist bevorzugt eine Metallschicht, insbesondere eine Stahlschicht.

Der Elastizitätskoeffizient des Schichtmaterials der Beschichtung entspricht vorzugsweise zumindest näherungsweise dem Elastizitätskoeffizienten des Gehäuses, mit einer Abweichung von vorzugsweise maximal ± 60 %.

Falls die äußere Beschichtung aus Stahl mit einem E-Modul von 210 GPa besteht, kann das Gehäuse beispielsweise aus globularem Grauguss mit einem E-Modul von ca. 130 GPa bestehen.

Es hält - nach dem Beschichten - allein die äußere Beschichtung den zusammengepressten Zustand der Statorbleche aufrecht, indem sie die mechanische Presskraft hierfür selbst ausübt. Auf weitere Pressmaßnahmen, wie Zugbolzen oder dergleichen innerhalb des Blechpakets kann dann in vorteilhafter Weise verzichtet werden.

Der Stator ist vorzugsweise in das Gehäuse eingeschrumpft, wodurch die Beschichtung des Stators an die Innenwand des Gehäuses gepresst wird.

Der Stator ist vorzugsweise zumindest abschnittsweise zylindrisch.

Vorteilhaft ist es, wenn der Stator bzw. sein Blechpaket eine Mantelfläche mit einem kreiszylindrischen Querschnitt aufweist. Die Mantelfläche begrenzt statorseitig den oder die Kühlkanäle und liegt außerhalb des oder der Kühlkanäle unmittelbar, vorzugsweise abdichtend, an der Innenwand des Gehäuses an.

Das Gehäuse ist vorzugsweise innenwandseitig mit zumindest einer Nut versehen. Die Nut bildet vorzugsweise denjenigen Innenwandabschnitt des Gehäuses, der gehäuseseitig den oder zumindest einen der Kühlkanäle begrenzt.

Der Stator ist erfindungsgemäß an seinen beiden - in axialer Richtung gesehen - Endabschnitten bezüglich seiner - im Querschnitt gesehen - Außenkontur gegenüber dem Gehäuse mittels einer Dichtung abgedichtet, um ein Eindringen von Kühlmittel in axialer Richtung in die Maschine zu vermeiden.

Die Dichtung wird erfindungsgemäß durch eine Schicht gebildet. Eine solche Schicht ist erfindungsgemäß eine Kaltgasspritzschicht ("Cold-Spray"-Schicht), eine Flammspritzschicht, eine mit einem thermischen Spritzverfahren für metallische Werkstoffe hergestellte Schicht oder eine Schicht, die durch Auftragsschweißen hergestellt worden ist. Vorzugsweise kann die Dichtung zusätzlich durch einen O-förmigen Ring gebildet werden.

Bei einem Verfahren zum Herstellen einer elektrischen Maschine, wird ein Stator in ein Gehäuse eingesetzt und mit diesem drehfest verbunden und zumindest ein Kühlkanal zum Führen eines Kühlmittels gebildet.

Der zumindest eine Kühlkanal wird durch das Einsetzen des Stators in das Gehäuse gebildet, nämlich durch einen Innenwandabschnitt der Innenwand des Gehäuses und einen Außenwandabschnitt einer Außenwand des Stators, die gemeinsam den zumindest einen Kühlkanal begrenzen.

Die Herstellung des Stators umfasst erfindungsgemäß das Aufeinanderlegen und Zusammenpressen einer Vielzahl an Statorblechen - unter Bildung eines Blechpakets - und das Beschichten der Stirnflächen (Außenkanten) der Statorbleche mit einer äußeren Beschichtung.

Die äußere Beschichtung der Stirnflächen wird erfindungsgemäß durch Kaltgasspritzen ("Cold-Spray"-Beschichten), Flammspritzen, ein thermisches Spritzverfahren für metallische Werkstoffe und/oder Auftragsschweißen hergestellt.

Die Stirnflächen der Statorbleche werden im zusammengepressten Zustand der Statorbleche mit der äußeren Beschichtung beschichtet. Die auf die Statorbleche während des Beschichtens von außen aufgebrachte Presskraft bleibt vorzugsweise nach dem Beschichten allein durch die äußere Beschichtung aufrechterhalten.

Nach dem Aufbringen der äußeren Beschichtung wird das beschichtete Blechpaket bzw. der beschichtete Stator vorzugsweise mittels einer Drehmaschine überdreht, wobei der Durchmesser des beschichteten Blechpakets bzw. des beschichteten Stators auf einen vorgegebenen Solldurchmesser gebracht und/oder die Oberfläche der äußeren Beschichtung geglättet wird.

Die Erfindung wird nachfolgend anhand von Ausführungsbeispielen näher erläutert; dabei zeigen beispielhaft:
- Figur 1: in einer schematischen Ansicht zur allgemeinen Erläuterung Bestandteile einer elektrischen Maschine mit Kühlkanälen im Inneren eines zweischaligen Gehäuses,
- Figur 2: in einer schematischen Ansicht Bestandteile eines Ausführungsbeispiels für eine erfindungsgemäße Maschine, bei der Kühlkanäle zwischen Gehäusewand und Stator angeordnet sind,
- Fig. 3-4: in einer schematischen Ansicht Herstellungsschritte zur Herstellung der Maschine gemäß Figur 2, und
- Figur 5: in einer schematischen Ansicht Bestandteile eines weiteren Ausführungsbeispiels für eine erfindungsgemäße Maschine.

In den Figuren werden der Übersicht halber für identische oder vergleichbare Komponenten stets dieselben Bezugszeichen verwendet.

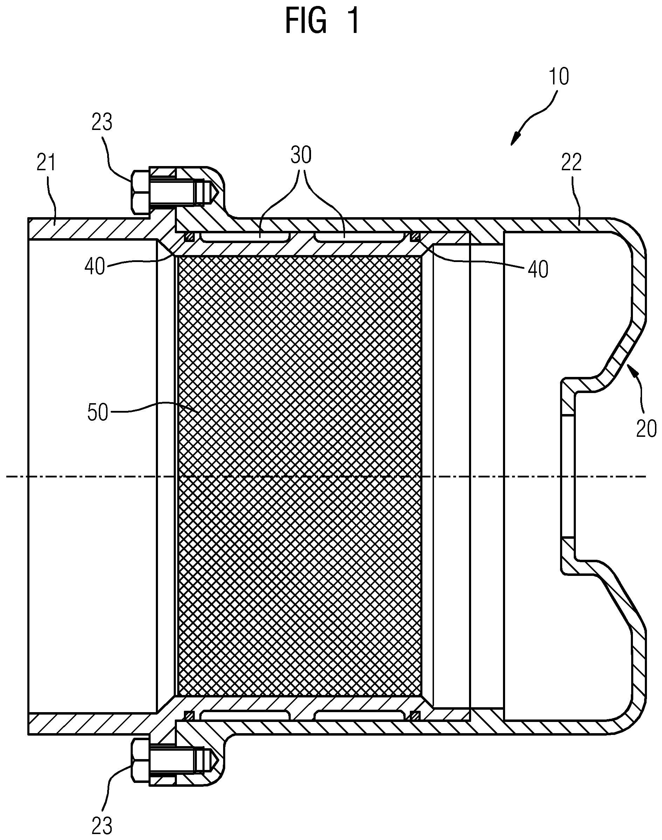

Die Figur 1 zeigt zur allgemeinen Erläuterung Bestandteile einer elektrischen Maschine 10, bei der ein Gehäuse 20 abschnittsweise einen zweischaligen Aufbau aufweist. Im zweischaligen Bereich umfasst das Gehäuse 20 ein erstes Gehäuseteil 21, auf das ein zweites Gehäuseteil 22 aufgeschoben ist. Im Bereich eines Flansches des ersten Gehäuseteiles 21 ist das zweite Gehäuseteil 22 mittels Schraubverbindungen 23 mit dem ersten Gehäuseteil 21 verschraubt.

Bei der Maschine gemäß Figur 1 ist das innenliegende erste Gehäuseteil 21 außenwandseitig mit Nuten versehen, die von dem außenliegenden zweiten Gehäuseteil 22 abgedeckt werden. Die Nuten bilden Kühlkanäle 30, die ein Kühlmittel zur Kühlung der elektrischen Maschine 10 führen können. Die Kühlkanäle 30 können auch bspw. mäander- oder spiralförmig angeordnet sein. Um zu vermeiden, dass ein in den Kühlkanälen 30 geführtes Kühlmittel aus dem Gehäuse 20 herausläuft, sind außerdem Dichtringe 40 vorgesehen.

Die Figur 1 zeigt darüber hinaus einen Stator 50, der im Inneren des Gehäuses 20 drehfest montiert ist, beispielsweise im Rahmen eines Schrumpfverfahrens in das Gehäuse 20 eingeschrumpft ist. Ein im Inneren des Stators 50 angeordneter Rotor der Maschine 10 ist aus Gründen der Übersicht nicht weiter dargestellt. Aus den gleichen Gründen ist auch die Ständerwicklung, im Stator 50 angeordnet, nicht gezeigt.

Der Stator 50 liegt somit außenwandseitig an dem ersten Gehäuseteil 21 an und wird durch die Gehäusewand des ersten Gehäuseteils 21 von den Kühlkanälen 30 getrennt. Mit anderen Worten steht der Stator 50 nicht unmittelbar mit den Kühlkanälen 30 in Verbindung, sondern nur mittelbar und thermisch durch die Gehäusewand des ersten Gehäuseteils 21 getrennt.

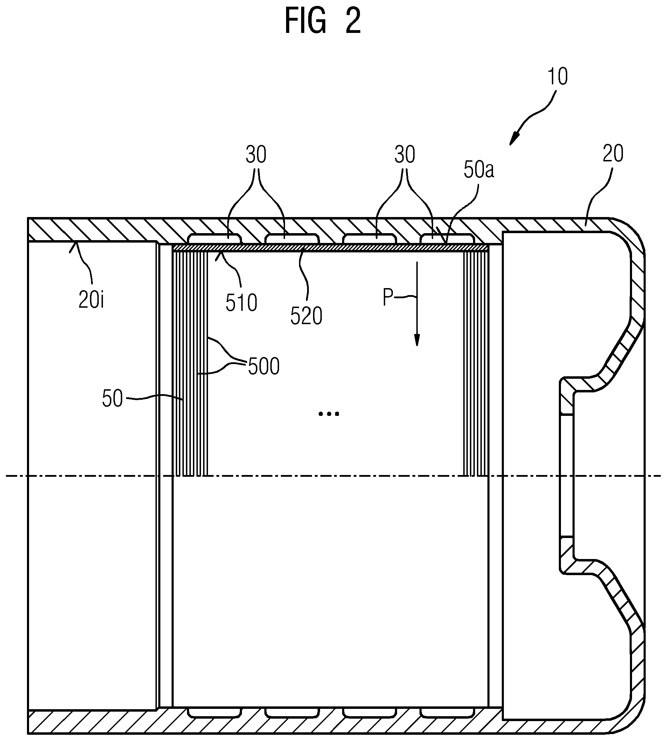

Die Figur 2 zeigt Bestandteile eines Ausführungsbeispiels für eine erfindungsgemäße elektrische Maschine 10. Es lässt sich erkennen, dass das Gehäuse 20 an seiner Innenwand 20i mit Nuten versehen ist, die unmittelbar an die Außenwand 50a des Stators 50 angrenzen. Die Nuten bilden mit dem Stator 50 Kühlkanäle 30. Jeder der Kühlkanäle 30 wird dabei durch einen Innenwandabschnitt der Innenwand 20i des Gehäuses 20 und einen gegenüberliegenden Außenwandabschnitt der Außenwand 50a des Stators 50 gebildet bzw. durch diese begrenzt.

Durch die Anordnung der Kühlkanäle 30 zwischen dem Gehäuse 20 und dem Stator 50 lässt sich der im Zusammenhang mit der Figur 1 gezeigt zweischalige Aufbau des Gehäuses 20 vermeiden.

Darüber hinaus wird in vorteilhafter Weise eine verbesserte Kühlwirkung erzielt, da das in den Kühlkanälen 30 geführte Kühlmittel unmittelbar an dem zu kühlenden Stator 50 vorbeigeleitet wird. Es wird somit eine bessere Wärmeabfuhr ermöglicht als im Falle einer Trennung des Kühlmittels bzw. der Kühlkanäle 30 vom Stator 50 durch eine Gehäusewand, wie dies in der Figur 1 der Fall ist.

Die Figur 2 lässt darüber hinaus erkennen, dass der Stator 50 vorzugsweise aus Statorblechen 500 gebildet wird, die aufeinander gepresst sind. Die außenliegenden Stirnflächen 510 bzw. Stirnkanten der Statorbleche 500 sind mit einer äußeren Beschichtung 520 versehen, die eine stirnflächen- bzw. stirnkantenübergreifende geschlossene glatte Außenfläche A520 aufweist und damit die Außenwand 50a bzw. die äußere Mantelfläche des Stators 50 bildet. Die Beschichtung 520 begrenzt die Kühlkanäle 30 und verhindert, dass Kühlmittel, das in den Kühlkanälen 30 geführt wird, radial nach innen entlang der Pfeilrichtung P in Lücken bzw. Spalte zwischen den Statorblechen 500 und damit in den Stator 50 bzw. das Blechpaket eindringen kann.

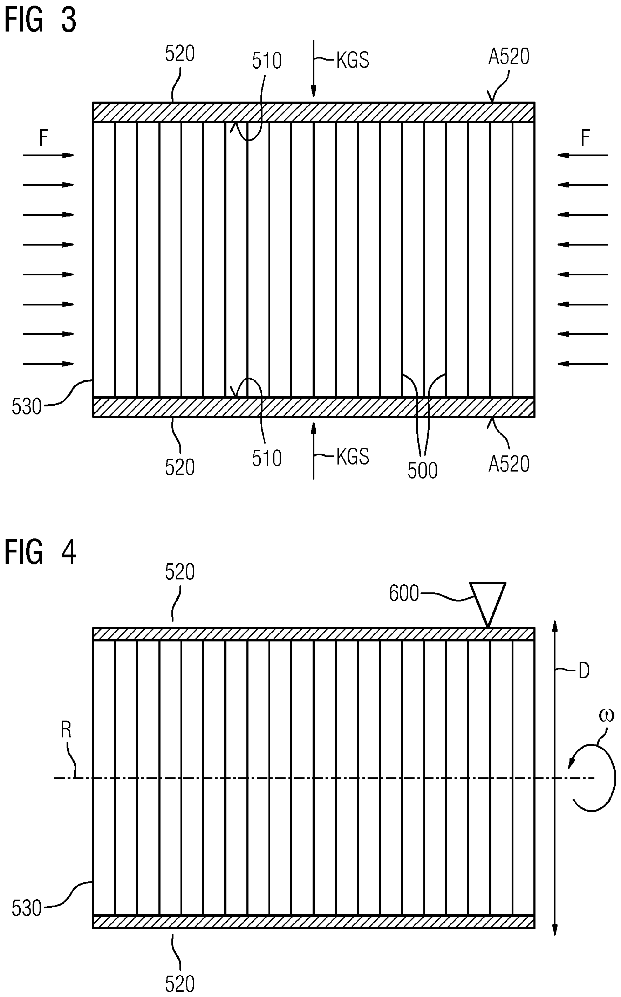

Die Figuren 3 und 4 zeigen Ausführungsbeispiele für Herstellungsschritte, die in vorteilhafter Weise zur Herstellung der in der Figur 2 gezeigten Maschine ausgeführt werden können.

Die Figur 3 zeigt die Statorbleche 500, die aufeinandergelegt und mittels einer Presskraft F zusammengepresst werden, sodass diese gemeinsam ein zusammengepresstes Blechpaket 530 bilden.

Im zusammengepressten Zustand werden die Stirnflächen 510 bzw. die Außenkanten der Statorbleche 500 mit der Beschichtung 520 versehen. Besonders vorteilhaft ist es, wenn das Aufbringen der äußeren Beschichtung 520 mittels Kaltgasspritzen erfolgt, das in der Figur 3 durch einen Pfeil mit dem Bezugszeichen KGS schematisch angedeutet ist.

Beim Kaltgasspritzen wird ein Prozessgas, vorzugsweise Stickstoff oder Helium, bei einem Druck beispielsweise im Bereich von ca. 50 bar, in einer Spritzpistole auf einige hundert Grad (vorzugsweise bis maximal ca. 1.100 Grad) aufgeheizt. Anschließend expandiert das Prozessgas in einer Lavaldüse der Spritzpistole auf Überschallgeschwindigkeit. In den Prozessgasstrahl wird Pulvermaterial, das die spätere Beschichtung 520 bilden soll, injiziert.

Das Pulvermaterial bzw. die injizierten Partikel werden durch das Prozessgas auf Überschallgeschwindigkeit beschleunigt und schlagen mit Geschwindigkeiten von vorzugsweise bis 1.200 m/s auf die außenliegenden Stirnflächen 510 bzw. Stirnkanten der Statorbleche 500 auf und bilden dort beim Aufprall die Beschichtung 520 in Form einer dichten, fest haftenden und sauerstoff- bzw. oxidarmen Schicht. Die Statorbleche 500 bzw. deren Stirnflächen 510 werden dabei in der Regel nicht wärmer als 100°C, sodass deren thermische Belastung während des Beschichtens minimal ist. Als Pulvermaterial wird vorzugsweise Stahl verwendet, vorzugsweise der Spezifikation H13, M3, 304, 316L, 430L, A286, M152, S420 oder 8620. Alternativ oder zusätzlich können in vorteilhafter Weise auch Nitride wie Aluminiumnitrid oder Keramikmaterial als Beschichtung 520 auf die außenliegenden Stirnflächen 510 aufgebracht werden.

Alternativ können anstelle des beschriebenen Kaltgasspritzens auch andere Beschichtungsverfahren eingesetzt werden, beispielsweise Flammspritzen, Hochgeschwindigkeitsflammspritzen, andere bekannte thermische Spritzverfahren für metallische Werkstoffe oder Auftragsschweißen; vorteilhaft ist es jedoch, wenn der thermische Eintrag in die Statorbleche 500 beim Beschichten möglichst gering ist, weshalb Kaltgasspritzen als besonders geeignet angesehen wird.

Die Dicke der Beschichtung 520 ist vorzugsweise derart gewählt, dass die Beschichtung 520 nach dem Aufbringen auf den Stirnflächen 510 die Presskraft F selbst aufrechterhalten kann, ohne dass zusätzliche Presseinrichtungen wie Bolzen oder dergleichen nötig wären. Das Blechpaket 530 wird also allein durch die Beschichtung 520 zusammengepresst und zusammengehalten.

Die Figur 4 zeigt beispielhaft einen nachfolgenden Bearbeitungsschritt, bei dem das mit der Beschichtung 520 versehene Blechpaket 530 bzw. der beschichtete Stator 50 mittels eines Materialabtragverfahrens, beispielsweise eines spanabhebenden Verfahrens wie Drehen, auf einen vorgegebenen Sollradius bzw. Solldurchmesser D gebracht wird. In der Figur 4 deutet ein Pfeil ω das Drehen des Blechpakets 530 um eine Achse R an; das Blechpaket 530 wird außenseitig mittels eines Schneidwerkzeugs 600 bearbeitet und dadurch im Durchmesser D reduziert.

Der Materialbearbeitungsschritt gemäß Figur 4 bewirkt darüber hinaus in vorteilhafter Weise eine Glättung der Beschichtung 520, sodass diese nach einem Einsetzen in das Gehäuse 20 gemäß Figur 2 spaltfrei anliegen und eine zuverlässige Abdichtung der Kühlkanäle 30 bewirken kann.

Nach dem Überarbeiten der Beschichtung 520 gemäß Figur 4 wird der entsprechend fertiggestellte Stator 50 in das Gehäuse 20 eingesetzt. Vorteilhaft ist es, wenn das Gehäuse 20 vor dem Einsetzen des Stators 50 zunächst erwärmt wird, sodass nach einem Einsetzen des Stators 50 automatisch eine reibschlüssige Verbindung zwischen Stator 50 und Gehäuse 20 durch das spätere Schrumpfen des Gehäuses 20 hervorgerufen wird.

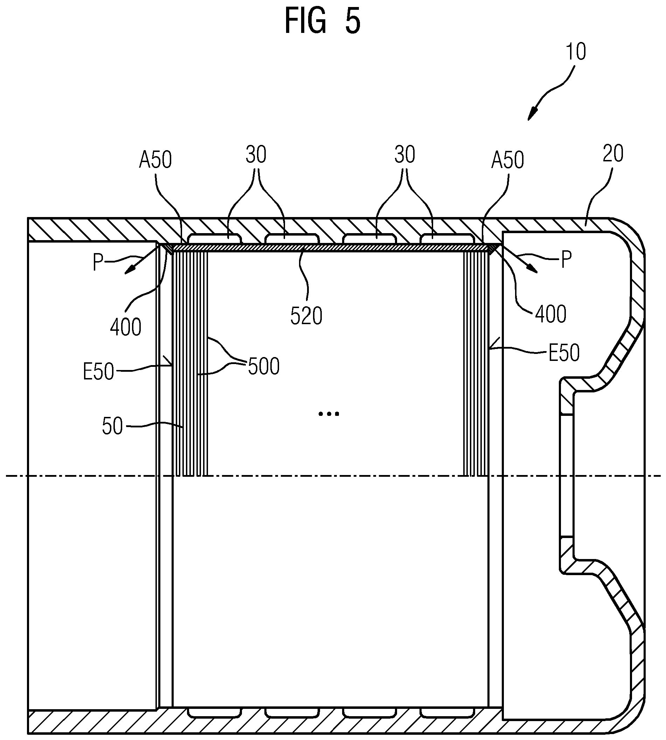

Die Figur 5 zeigt ein weiteres Ausführungsbeispiel für eine elektrische Maschine 10, bei der Kühlkanäle 30 durch den Stator 50 und das Gehäuse 20 begrenzt werden. Im Unterschied zu dem Ausführungsbeispiel gemäß Figur 2 sind zusätzliche Dichtungen 400 vorgesehen, die - in axialer Richtung des Stators 50 gesehen - im Bereich der Endflächen E50 die Außenkontur A50 des Stators 50 gegenüber dem Gehäuse 20 abdichten. Die Dichtungen 400 verhindern, dass Kühlmittel entlang der Pfeile P bzw. in axialer Richtung aus den Kühlkanälen 30 heraus in die Maschine 10 fließen kann.

Erfindungsgemäß werden die Dichtungen 400 durch ein Beschichtungsverfahren gebildet, beispielsweise durch Kaltgasspritzen, Flammspritzen, Hochgeschwindigkeitsflammspritzen, andere bekannte thermische Spritzverfahren für metallische Werkstoffe oder Auftragsschweißen; vorteilhaft ist es jedoch, wenn auch hier der thermische Eintrag in den Stator 50 möglichst gering ist, weshalb Kaltgasspritzen als besonders geeignet angesehen wird.

Obwohl die Erfindung im Detail durch bevorzugte Ausführungsbeispiele näher illustriert und beschrieben wurde, so ist die Erfindung nicht durch die offenbarten Beispiele eingeschränkt. Der Schutzumfang der Erfindung wird durch die angehängten Ansprüche definiert.

### Bezugszeichenliste

- 10: elektrische Maschine
- 20: Gehäuse
- 20i: Innenwand
- 21: erstes Gehäuseteil
- 22: zweites Gehäuseteil
- 23: Schraubverbindung
- 30: Kühlkanal
- 40: Dichtring
- 50: Stator
- 50a: Außenwand
- 400: Dichtung
- 500: Statorblech
- 510: außenliegende Stirnfläche
- 520: Beschichtung
- 530: Blechpaket
- 600: Schneidwerkzeug

- A50: Außenkontur
- A520: Außenfläche
- D: Solldurchmesser
- E50: Endfläche
- F: Presskraft
- KGS: Kaltgasspritzen
- P: Pfeilrichtung
- R: Achse
- ω: Pfeil

## Patentansprüche

1. Elektrische Maschine (10) mit
- einem Stator (50) und einem Gehäuse (20), in dem der Stator (50) drehfest gegenüber dem Gehäuse (20) montiert ist, und
- zumindest einem Kühlkanal (30) zum Führen eines Kühlmittels,
wobei
- der Kühlkanal (30) durch einen Innenwandabschnitt der Innenwand (20i) des Gehäuses (20) und einen gegenüberliegenden Außenwandabschnitt einer Außenwand (50a) des Stators (50) gebildet und begrenzt ist,
- der Stator (50) eine Vielzahl an aufeinandergepressten Statorblechen (500) aufweist,
- außenliegende Stirnflächen (510) der Statorbleche (500) mit einer äußeren Beschichtung (520) beschichtet sind, die eine äußere Mantelfläche des Stators (50) bildet, und
- die äußere Beschichtung (520) den Außenwandabschnitt der Außenwand (50a) des Stators (50) bildet, die den Kühlkanal (30) statorseitig begrenzt,
- die äußere Beschichtung (520) des Stators (50) eine Kaltgasspritzschicht, eine Flammspritzschicht, eine mit einem thermischen Spritzverfahren für metallische Werkstoffe hergestellte Schicht oder eine Schicht ist, die durch Auftragsschweißen hergestellt worden ist, und
- allein die äußere Beschichtung (520) die mechanische Presskraft (F) ausübt, die die Statorbleche (500) im zusammengepressten Zustand hält,
**dadurch gekennzeichnet, dass**
- der Stator (50) an seinen beiden - in axialer Richtung gesehen - Endabschnitten bezüglich seiner - im Querschnitt gesehen - Außenkontur gegenüber dem Gehäuse (20) mittels einer Dichtung (400) abgedichtet ist, und
- die Dichtung (400) gebildet wird durch eine Schicht in Form einer Kaltgasspritzschicht, einer Flammspritzschicht, einer mit einem thermischen Spritzverfahren für metallische Werkstoffe hergestellten Schicht oder einer Schicht, die durch Auftragsschweißen hergestellt ist.

2. Elektrische Maschine (10) nach Anspruch 1,
**dadurch gekennzeichnet, dass**
die äußere Beschichtung (520) des Stators (50)
- eine Metallschicht, insbesondere eine Stahlschicht ist, und/oder
- einen Elastizitätskoeffizienten aufweist, der maximal ± 60 % von dem Elastizitätskoeffizienten des Gehäuses (20) abweicht.

3. Elektrische Maschine (10) nach einem der voranstehenden Ansprüche,
**dadurch gekennzeichnet, dass**
der Stator (50) in das Gehäuse (20) eingeschrumpft ist und die Beschichtung (520) des Stators (50) an die Innenwand (20i) des Gehäuses (20) gepresst wird.

4. Elektrische Maschine (10) nach einem der voranstehenden Ansprüche,
**dadurch gekennzeichnet, dass**
- der Stator (50) zumindest abschnittsweise zylindrisch ist und dort eine Mantelfläche mit einem kreiszylindrischen Querschnitt aufweist und
- die Mantelfläche im Bereich des oder der Kühlkanäle (30) den oder die Kühlkanäle (30) statorseitig begrenzt und außerhalb des oder der Kühlkanäle (30) unmittelbar an der Innenwand (20i) des Gehäuses (20) anliegt.

5. Elektrische Maschine (10) nach einem der voranstehenden Ansprüche,
**dadurch gekennzeichnet, dass**
- das Gehäuse (20) innenwandseitig mit zumindest einer Nut versehen ist und
- die Nut denjenigen Innenwandabschnitt des Gehäuses (20) bildet, der gehäuseseitig den oder zumindest einen der Kühlkanale (30) begrenzt.

6. Elektrische Maschine (10) nach einem der voranstehenden Ansprüche,
**dadurch gekennzeichnet, dass**
die Dichtung (400) zusätzlich durch einen O-förmigen Ring gebildet wird.

## Claims

1. Electric machine (10) with
- a stator (50) and a housing (20), in which the stator (50) is mounted in a rotationally fixed manner in relation to the housing (20), and
- at least one cooling channel (30) for conveying a coolant,
wherein
- the cooling channel (30) is formed and delimited by an inner wall section of the inner wall (20i) of the housing (20) and an opposite outer wall section of an outer wall (50a) of the stator (50),
- the stator (50) has a large number of stator laminations (500) that are pressed against one another,
- external end faces (510) of the stator laminations (500) are coated with an outer coating (520), which forms an outer peripheral face of the stator (50), and
- the outer coating (520) forms the outer wall section of the outer wall (50a) of the stator (50), which delimits the cooling channel (30) on the stator side,
- the outer coating (520) of the stator (50) is a cold gas sprayed layer, a flame-sprayed layer, a layer produced using a thermal spraying method for metallic materials or a layer that has been produced by deposition welding, and
- only the outer coating (520) exerts the mechanical pressing force (F) that holds the stator laminations (500) in the pressed-together state,
**characterised in that**
- the stator (50) is sealed off from the housing (20) with regard to its outer contour, when viewed in cross-section, at its two end sections, when viewed in the axial direction, by means of a seal (400), and
- the seal (400) is formed by a layer in the form of a cold gas sprayed layer, a flame-sprayed layer, a layer produced using a thermal spraying method for metallic materials or a layer that is produced by deposition welding.

2. Electric machine (10) according to claim 1,
**characterised in that**
the outer coating (520) of the stator (50)
- is a metal layer, in particular a steel layer, and/or
- has a coefficient of elasticity that deviates at most ±60% from the coefficient of elasticity of the housing (20).

3. Electric machine (10) according to one of the preceding claims,
**characterised in that**
the stator (50) is shrink-fitted into the housing (20) and the coating (520) of the stator (50) is pressed against the inner wall (20i) of the housing (20).

4. Electric machine (10) according to one of the preceding claims,
**characterised in that**
- the stator (50) is cylindrical, at least in sections, and has a peripheral face there with a circular cylindrical cross-section, and
- the peripheral face delimits the cooling channel or cooling channels (30) on the stator side in the region of the cooling channel or cooling channels (30) and directly abuts the inner wall (20i) of the housing (20) outside the cooling channel or cooling channels (30).

5. Electric machine (10) according to one of the preceding claims,
**characterised in that**
- the housing (20) is provided with at least one slot on the inner wall side, and
- the slot forms the inner wall section of the housing (20) that delimits the cooling channel or at least one of the cooling channels (30) on the housing side.

6. Electric machine (10) according to one of the preceding claims,
**characterised in that**
the seal (400) is additionally formed by an O-shaped ring.

## Revendications

1. Machine (10) électrique comprenant
- un stator (50) et un carter (20), dans lequel le stator (50) est monté fixe en rotation par rapport au carter (20), et
- au moins un conduit (30) de refroidissement pour conduire un fluide réfrigérant,
dans laquelle
- le conduit (30) de refroidissement est formé et délimité par une partie de la paroi (20i) intérieure du carter (20) et par une partie opposée d'une paroi (50a) extérieure du stator (50),
- le stator (50) a une pluralité de tôles (500) statoriques pressées les unes sur les autres,
- des surfaces (510) frontales se trouvant à l'extérieur des tôles (500) statoriques sont revêtues d'un revêtement (520) extérieur, qui forme une surface extérieure d'enveloppe du stator (50), et
- le revêtement (520) extérieur forme la partie de la paroi (50a) extérieure du stator (50), qui délimite du côté du stator le conduit (30) de refroidissement,
- le revêtement (520) extérieur du stator (50) est une couche de pulvérisation au gaz froid, une couche de pulvérisation à la flamme, une couche fabriquée par un procédé de pulvérisation thermique pour des matériaux métalliques ou une couche, qui a été produite par soudage avec apport, et
- seul le revêtement (520) extérieur applique la force (F) mécanique de pression, qui maintient des tôles (500) statoriques dans l'état pressé ensemble,
**caractérisée en ce que**
- le stator (50) est sur ses deux - considérées dans la direction axiale - parties d'extrémité en ce qui concerne son -considéré en coupe transversale - contour extérieur, rendu étanche par rapport au carter (20) au moyen d'une étanchéité (400), et
- l'étanchéité (400) est formée par une couche sous la forme d'une couche de pulvérisation au gaz froid, d'une couche de pulvérisation à la flamme, d'une couche fabriquée par un procédé de pulvérisation thermique pour des matériaux métalliques ou d'une couche, qui est fabriquée par soudage avec apport.

2. Machine (10) électrique suivant la revendication 1,
**caractérisée en ce que**
le revêtement (520) extérieur du stator (50)
- est une couche métallique, en particulier une couche d'acier, et/ou
- a un coefficient d'élasticité, qui s'écarte au maximum de ±60% du coefficient d'élasticité du carter (20).

3. Machine (10) électrique suivant l'une des revendications précédentes,
**caractérisée en ce que**
le stator (50) est introduit avec retrait dans le carter (20) et le revêtement (520) du stator (50) est pressé sur la paroi (20i) intérieure du carter (20).

4. Machine (10) électrique suivant l'une des revendications précédentes,
**caractérisée en ce que**
- le stator (50) est, au moins par parties, cylindrique et y a une surface d'enveloppe de section droite cylindrique circulaire, et
- la surface d'enveloppe délimite, du côté du stator dans la partie du ou des conduits (30) de refroidissement, le ou les conduits (30) de refroidissement et s'applique, à l'extérieur du ou des conduits (30) de refroidissement, directement à la paroi (20i) intérieure du carter (20).

5. Machine (10) électrique suivant l'une des revendications précédentes,
**caractérisée en ce que**
- le carter (20) est pourvu, du côté de la paroi intérieure, d'au moins une rainure et
- la rainure forme la partie du paroi intérieure du carter (20), qui délimite du côté du carter le ou au moins l'un des conduits (30) de refroidissement.

6. Machine (10) électrique suivant l'une des revendications précédentes,
**caractérisée en ce que**
l'étanchéité (400) est formée supplémentairement par un joint torique.
